# EUROPEAN PATENT SPECIFICATION

(11) **EP 3 470 239 B1**
(45) Date of publication and mention of the grant of the patent: **05.08.2020**
(21) Application number: 18199543.2
(22) Date of filing: 10.10.2018
(51) Int. Cl.: B60B 7/00

(54) **ATTACHMENT SYSTEM OF LATERAL COVERING DISCS FOR SELF-ORIENTABLE WHEELS, WHEEL USING SAID ATTACHMENT SYSTEM AND RELATED ASSEMBLY KIT**
VERBINDUNGSSYSTEM FÜR SEITENSCHEIBEN EINES SELBSTVERSTELLBARES RAD, RAD MIT SOLCHER VERBINDUNG UND MONTAGEBAUSATZ
SYSTÈME DE DISQUE LATERALE POUR ROUE AUTO-ORIENTABLE, ROUE AVEC UN TEL SYSTÈME ET KIT DE MONTAGE

(30) Priority: 10.10.2017 IT 201700113980
(43) Date of publication of application: 17.04.2019
(73) Proprietor: O.G.T.M. Officine Meccaniche S.r.l., 26866 Sant'Angelo Lodigiano (LO) (IT)
(72) Inventor: BAVUSO, Giuseppe, 26866 Sant'Angelo Lodigiano (LO) (IT); TRIVINI, Ruggero, 26866 Sant'Angelo Lodigiano (LO) (IT)
(74) Representative: Brunacci, Marco

(56) References cited:
- EP-A1- 0 417 417
- CN-U- 205 416 995
- DE-A1-102010 041 953
- FR-A1- 2 962 366
- JP-A- 2014 218 180

## Description

The present invention refers to an attachment system of lateral covering discs for self-orientable wheels and, in particular, to an attachment system of interchangeable lateral covering discs on a self-orientable twin wheel.

In the rest of this description and subsequent claims, by a self-orientable twin wheel is meant a wheel that can be fixed to a support device (e.g. a piece of furniture or a chair) that orientates itself according to the direction of movement of the support device itself.

Generally, a twin wheel is made up of a pair of substantially identical rollers mounted revolving on a shaft or hub which is supported on a central body that can be coupled to a piece of furniture by means e.g. of a vertical pin. Generally the wheels are also provided with lateral covering discs for the rollers One example belonging to the state of the art is disclosed in patent document EP 0 417 417 A1.

The Applicant has found that the known twin wheels for furniture have complicated interlocking systems of the lateral covering discs. The Applicant has also noticed that the lateral discs are difficult for users to replace on their own.

The Applicant has therefore discovered that, by providing a special attachment seat on the roller of a self-orientable wheel, a simple, fast and inexpensive attachment system of lateral covering discs can be made which allows a user to replace the discs in a completely autonomous way.

The present invention therefore relates to an attachment system of lateral covering discs for self-orientable wheels having structural and functional characteristics such as to satisfy the aforementioned requirements and at the same time to overcome the drawbacks referred to with reference to the prior art. This object is achieved by an attachment system of lateral covering discs for self-orientable wheels according to claim 1.

According to a further aspect, the present invention relates to a twin wheel according to claim 14.

Finally, the Applicant has also realized that by allowing a user to replace the lateral covering discs on his/her own, the wheels can be decorated according to a potentially endless number of combinations.

Therefore, according to a further aspect again, the present invention relates to a decorative assembly kit of lateral covering discs for a wheel according to claim 12.

Other characteristics and advantages of the attachment system of lateral covering discs according to the present invention will become more evident from the description below of a preferred embodiment, illustrated by way of an indicative, but non-limiting example, with reference to the attached drawings, in which:
- Figure 1 shows an exploded perspective view of the attachment system of lateral covering discs for self-orientable wheels according to the present invention,
- Figures 2a, 2b show side perspective views of the central body of the wheel of Figure 1,
- Figures 3a, 3b show perspective views of the rollers of the wheel of Figure 1,
- Figures 4 and 5 show side perspective views of the lateral covering discs according to a first embodiment,
- Figure 6 shows a perspective view of the lateral covering discs according to a second embodiment,
- Figure 7 shows a cross-section view of the wheel of Figure 1 in an assembled configuration.

With reference to the attached illustrations, reference numeral 1 globally indicates a self-orientable wheel, in particular, a twin wheel intended to receive lateral covering discs according to the present invention.

The twin wheel comprises a central body 2 coupleable to a supporting device, such as e.g. a piece of furniture or a chair, and comprises two opposed and parallel lateral walls 3,4 between which a through channel 5 is extended. Preferably, the central body 2 has a substantially discoidal shape.

The central body 2 has a thickness Sc comprised between 5 mm and 10 mm, preferably 6 mm and is made of metallic material, preferably zamak.

The through channel 5 is obtained in the central body 2 in a position substantially central to the lateral walls 3,4 and has a preferably cylindrical extension along a longitudinal direction X-X between said lateral walls 3,4. In particular, the through channel 5 has a diameter DM comprised between 5 and 15 mm, preferably 10 mm.

The through channel 5 acts as a seat for a hub M with a diameter preferably coinciding with the diameter of the channel 5. The hub M is rigidly keyed coaxially into the through channel 5. In one variant, the hub M is keyed idle into the through channel 5 and is free to rotate around its own axis.

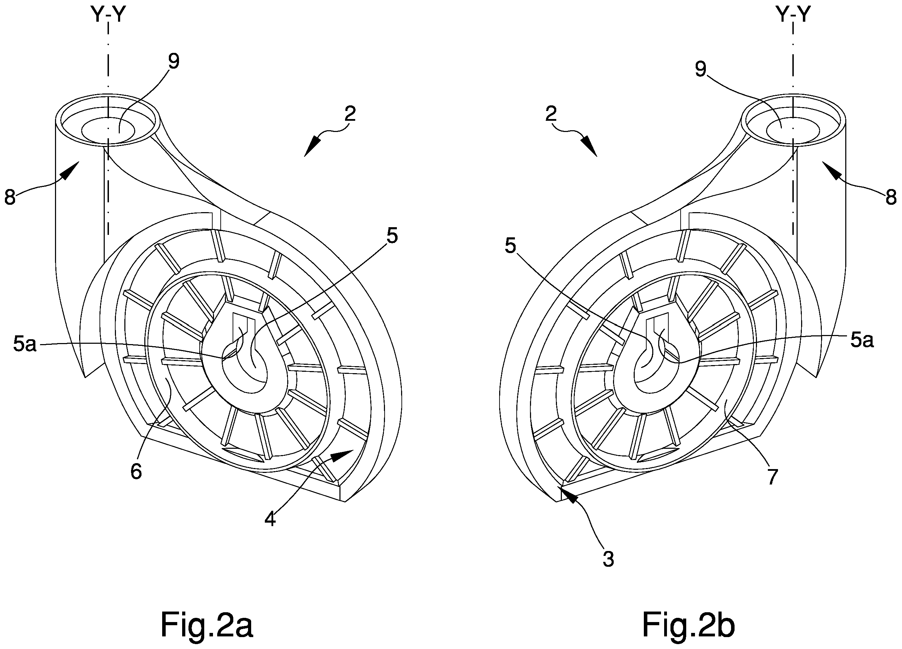

According to one embodiment, the central body 2 can comprise a pocket 5a which extends vertically along a direction Y-Y perpendicular to the longitudinal direction X-X with preferably rectangular extension and in communication with the through channel 5 for the housing of a thrust spring 30 acting on the hub M. As shown in the example of Figures 2a, 2b, the central body 2 comprises an extending element 8 having a cylindrical cavity 9 extended by a predetermined length along the perpendicular direction Y-Y. The cylindrical cavity 9 is adapted to receive an assembly pin P which is extended, in use, vertically along the perpendicular direction Y-Y. The pin P is intended for the pivoting connection of the twin wheel 1 to a supporting device (not shown).

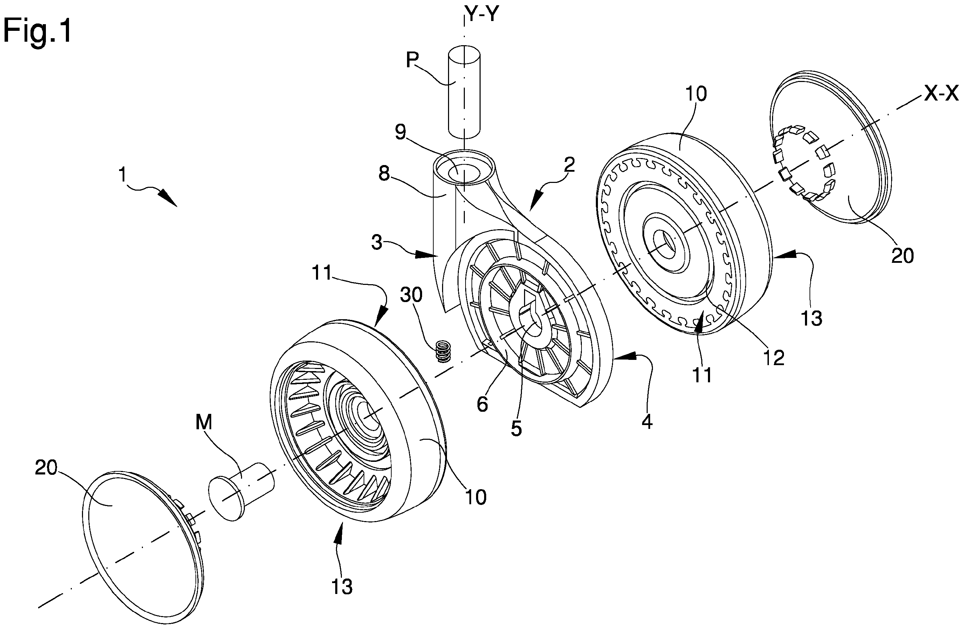

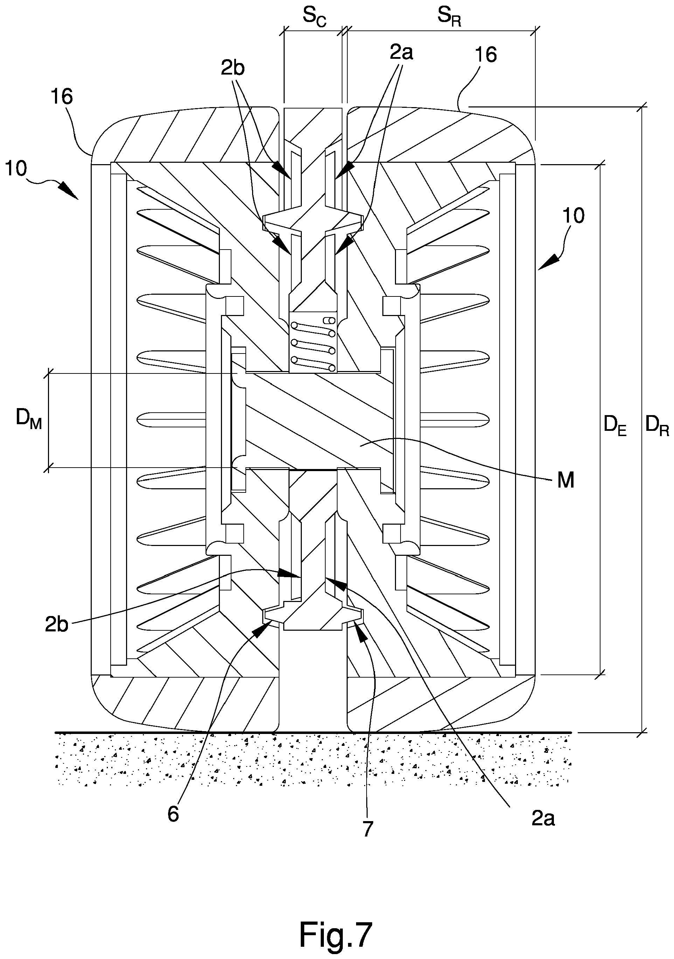

The twin wheel 1 comprises a pair of rollers 10 connected in a revolving manner to one another by means of the hub M. As shown in the example of Figure 1, the rollers 10 have a substantially cylindrical shape and each has an inner side 11 and an outer side 13. The inner side 11 is the side of the roller 10 which, in use, faces one of the lateral walls 3 or 4 of the central body 2. As shown in the example of Figure 7, in the assembled configuration the rollers 10 are oriented back to back and separated from the central body 2.

In the rest of the present description and in the following claims, when referring to the rollers 10 reference can be made indistinctly to one or the other roller the latter being, preferably, of substantially identical shape and dimensions. Similarly, with reference to the lateral covering discs, reference can be made indistinctly to one or the other lateral covering disc, the latter being, preferably, of substantially identical shape and dimensions.

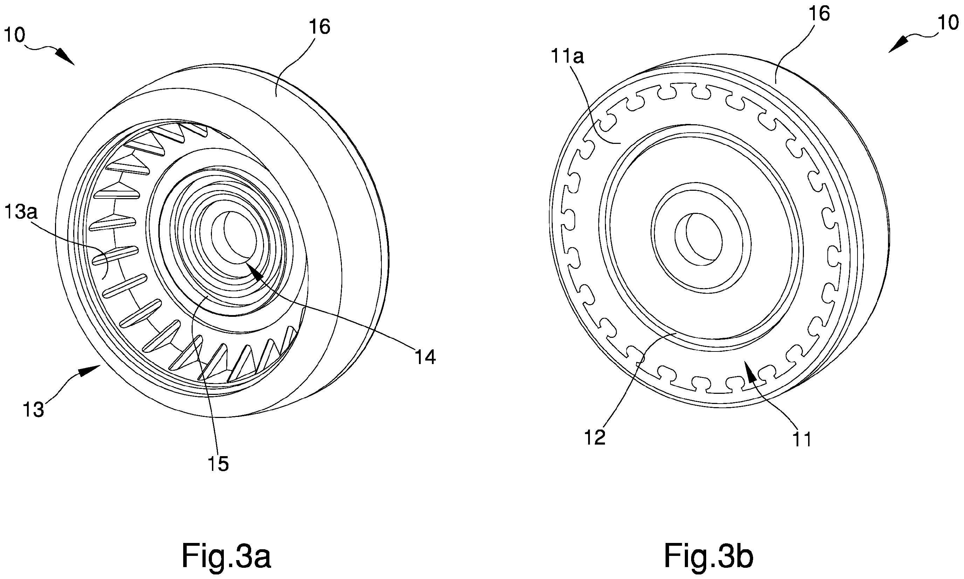

As shown in the examples of Figures 3a, 3b, the inner side 11 of the roller 10 comprises a surface 11a with a substantially flat extension. Conversely, the outer side 13 of the roller 10 has a surface 13a with a substantially concave profile with concavity facing its inner side 11.

The outer side 13 of the roller 10 also has an anchoring flat surface 14 for anchoring the hub M from which the concave surface 13a extends.

The inner side 11 of the roller 10 has an annular seat 15 to receive the lateral covering discs 20 as described in detail in the remaining part of this description.

According to the invention, the attachment seat 15 comprises a circular recess obtained in the flat surface 14 around the through channel 5.

As illustrated in the example of Figure 7, the roller 10 has a diameter D_{R} comprised between 50 mm and 100 mm, preferably measuring 65 mm and a thickness S_{R} comprised between 10 mm and 30 mm, preferably measuring 20 mm. The total thickness of the twin wheel 1 in accordance with the present invention is comprised between 30 mm and 60 mm, preferably 46 mm, thus ensuring the realization of an extremely compact twin wheel.

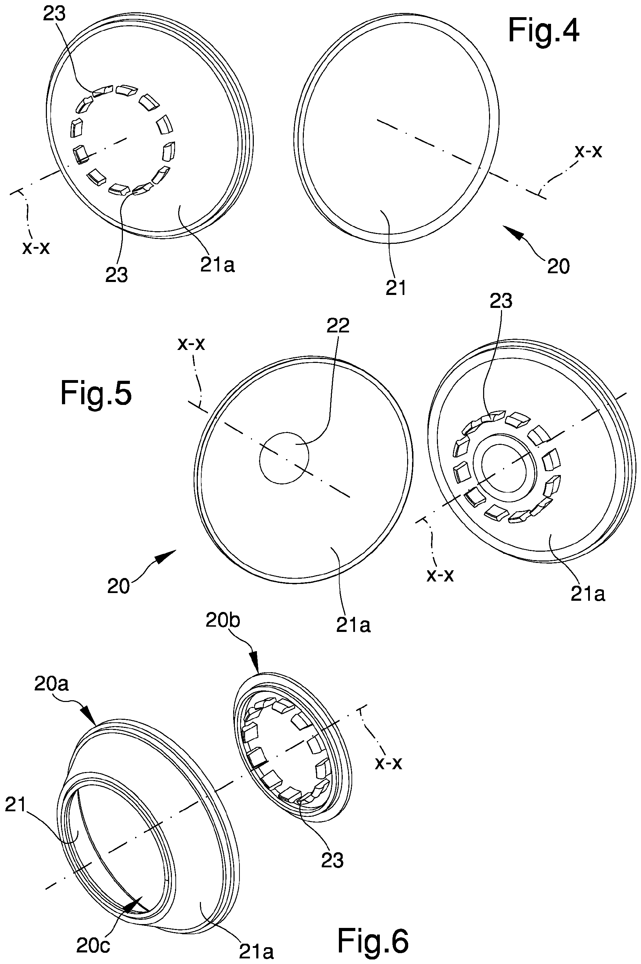

As shown in the examples in Figures 4 to 6, the twin wheel 1 advantageously comprises interchangeable lateral covering discs 20, which can be connected to the attachment seat 15 of the roller 10 by means of an attachment system which allows covering and, at the same time, protecting the outer side 13 of the rollers 10 in a simple and fast way.

According to the first embodiment shown in Figure 4, the lateral covering disc 20 has an outer covering surface 21 and an inner covering surface 21a opposite the outer covering surface 21.

Preferably, the lateral covering disc 20 has a substantially lenticular shape. Preferably, the lateral covering disc 20 has a substantially convex-concave lenticular shape with the concavity facing, in the assembled configuration, the hub M of the twin wheel 10.

On the opposite side of the covering surface 21 attachment elements 23 are provided which are locked together with the inner covering surface 21a of the lateral covering disc 20.

According to the invention, the attachment elements 23 are arranged in a circular pattern and comprise a plurality of teeth overhanging transversely along a direction parallel to the axial direction X-X of extension of the lateral covering disc 20. Preferably, the attachment elements 23 are not less than twelve in number.

In one variant shown in the example of Figure 5, the lateral covering disc 20 comprises one surface portion at least partly flat 22 and oriented substantially orthogonal with respect to the axial direction X-X of extension of the lateral covering disc 20.

According to the second embodiment shown in the example of Figure 6, the lateral covering disc 20 has a hollow body 20a and a plug 20b coupleable to one another.

The hollow body 20a has an annular outer covering surface 21 preferably tapered and intended to receive, by shape mating, the plug 20b, the latter being intended to cover the hole 20c of the hollow body 20a. The plug 20b is provided with the attachment elements 23 arranged in a circular pattern and comprising a plurality of teeth projecting transversely along the direction X-X so that the plug 20b closes the hollow body 20a when coupled to the attachment seat 15 of the roller 10.

Similarly to what described in the first embodiment, the attachment elements 23 are preferably in a number not less than twelve.

In both embodiments, the attachment elements 23 are intended to be coupled in a removable manner with the annular seat 15 of the roller 10. Advantageously, the coupling is of the snap-in type by interference in order to facilitate and speed up the attachment/release operations of the lateral covering discs 20 to/from the rollers 10. Preferably, the attachment elements 23 are arranged around a circumference of diameter comprised between 10 mm and 20 mm, preferably 15 mm.

With reference to the examples shown in the Figures 2A, 2B, each lateral wall 3,4 of the central body 2 has a protective annular element 6,7 overhanging transversely along the direction X-X orthogonal to said lateral walls 3,4. The protective annular elements 6,7 of the central body 2 act as a protection for the hub M since they are intended to fit, by shape mating, into corresponding annular recesses 12 formed in the rollers 10.

The protective annular element 6,7 has a hollow cylindrical shape and is in a radial position comprised between the extending element 8 and the through channel 5 of the central body 2. In particular, the protective annular element 6,7 has a diameter comprised between 30 mm and 50 mm, preferably 40 mm.

According to a preferred embodiment, the protective annular element 6,7 projects from the lateral walls 3,4 of the central body by a distance comprised between 0.5 mm and 3 mm, preferably 1 mm.

With reference to the example shown in Figure 7, the central body 2 has a substantially continuous cross-section profile with opposite depression zones 2a,2b comprised around the protective annular element 6,7.

Advantageously, as shown in the examples of Figures 2A, 2B, the protective annular element 6,7 has an outer straight conical revolution surface.

With reference to the example of Figure 3B, the annular recess 12 of the roller 10 is obtained at its inner side 11. This way, when the rollers 10 are mounted on the hub M and positioned alongside with the central body 2, each projecting protective annular element 6,7 is inserted in the annular recess 12 by shape mating. In point of fact, the annular recess 12 can act both as a guide for the protective annular element 6,7 during the rotation of the rollers 10 with consequent greater overall stability of the twin wheel 1, and as a protection against dirt by preventing this from penetrating inside the wheel 1 towards the hub M.

In one version, the twin wheel 1 comprises a pair of cylindrical casings 23 each adapted to be fitted on a respective roller 10 for covering the roller itself. The cylindrical casing 23 is advantageously interchangeable and is preferably made of a polymeric material, e.g. rubber.

As shown in the examples illustrated in Figures 4 to 6, advantageously, the lateral covering discs 20 can be part of a decorative kit and are intended to be mounted on one or both rollers 10 of a twin wheel 1. For example, a casing can be provided containing different versions, shapes and colors of the lateral covering discs to be attached to the twin wheel. In a version not shown, the twin wheel may also comprise just one roller.

As it has been possible to determine from the present description, it has been ascertained how the described invention achieves the intended objects and in particular the fact is underlined that by means of this attachment system lateral covering discs can be fitted on one or more rollers in a simple, fast and inexpensive way.

Moreover, thanks to the particular conformation of the attachment seat on the roller and of the projecting elements of the lateral covering discs, the attachment system allows even an inexperienced user to replace the lateral covering discs in a completely autonomous way.

## Claims

1. Attachment system of lateral covering discs for self-orientable wheels, comprising:
at least one roller (10) mounted revolving on a hub (M) supported by a central body (2) which can be coupled to a supporting device,
wherein said at least one roller (10) has an outer side (13) comprising an attachment seat (15), the attachment system being **characterised by** the fact that it comprises at least an interchangeable lateral covering disc (20) and connectable, by shape mating, to said at least one roller (10) at said attachment seat (15),
wherein said attachment seat (15) comprises a circular recess (15a) formed around the anchoring area of the hub (M),
wherein said lateral covering disc (20) has an inner covering surface (21a) opposite said outer covering surface (21), the inner covering surface (21a) comprising attachment elements (23) overhanging therefrom and coupleable in a removable manner to the attachment seat (15) of the roller (10),
wherein said attachment elements (23) are arranged in a circular pattern and comprise a plurality of teeth overhanging transversely with respect to said inner covering surface (21a).

2. Attachment system according to claim 1, wherein said at least one roller (10) has an outer side (13) and an inner side (11) opposed to one another, the outer side (13) comprising an anchoring flat surface (14) for anchoring said hub (M) on which said attachment seat (15) is formed.

3. Attachment system according to any one of claims 1 or 2, wherein said lateral covering disc (20) has a substantially lenticular shape.

4. Attachment system according to claim 3, wherein said lateral covering disc (20) has a substantially convex-concave lenticular shape.

5. Attachment system according to any one of claims 1 to 4, wherein said lateral covering disc (20) comprises a portion of surface at least partially flat (22) and oriented substantially orthogonal with respect to the axial direction (X-X) of extension of said lateral covering disc (20).

6. Attachment system according to claim 5, wherein said attachment elements (23) overhang from said flat surface (22).

7. Attachment system according to any one of claims 1 to 6, wherein the lateral covering disc (20) has a hollow body (20a) and a plug (20b) coupleable to one another.

8. Attachment system according to claim 7, wherein said plug (20b) comprises attachment elements (23) overhanging therefrom and coupleable in a removable manner to the attachment seat (15) of the roller (10), so that said plug (20b) closes said hollow body (20a) when coupled to said attachment seat (15).

9. Attachment system according to any one of claims 1 to 8, wherein said attachment elements (23) are not less than twelve in number and are adapted to be fitted into said circular recess (15a) and wherein the coupling is of the snap-in type by interference.

10. Twin wheel (1) comprising:
a central body (2) intended to be coupled to a supporting device and comprising two opposed lateral walls (3,4) extending on parallel planes and between which a through channel (5) is positioned,
a pair of rollers (10) connected in a revolving manner to one another by means of a hub (M) keyed in said through channel (5), the pair of rollers (10) having each an inner side (11) facing the lateral walls (3,4) of the central body (2), **characterized by** the fact that it comprises an attachment system for attaching the lateral covering discs (20) according to any one of the claims 1 to 9.

11. Twin wheel (1) according to claim 10, wherein said lateral covering discs (20) are interchangeable and can have different colors.

12. Decorative assembly kit for lateral covering discs for wheel (1) comprising a plurality of interchangeable lateral covering discs (20) and a roller (10) according to any one of claims 1 to 11.

## Patentansprüche

1. Befestigungssystem von seitlichen Abdeckscheiben für selbstausrichtende Räder, umfassend:
mindestens eine Rolle (10), die drehbar auf einer Nabe (M) montiert ist, die an einem zentralen Körper (2) gelagert ist, der mit einer Haltevorrichtung gekoppelt werden kann,
wobei die mindestens eine Rolle (10) eine Außenseite (13) aufweist, die einen Befestigungssitz (15) umfasst,
wobei das Befestigungssystem **dadurch gekennzeichnet ist,**
**dass** es mindestens eine austauschbare seitliche Abdeckscheibe (20) umfasst und durch Formpassung mit der mindestens einen Rolle (10) an dem Befestigungssitz (15) verbindbar ist,
wobei der Befestigungssitz (15) eine kreisförmige Aussparung (15a) aufweist, die um den Verankerungsbereich der Nabe (M) herum ausgebildet ist,
wobei die seitliche Abdeckscheibe (20) eine innere Abdeckfläche (21a) gegenüber der äußeren Abdeckfläche (21) aufweist, wobei die innere Abdeckfläche (21a) Befestigungselemente (23) aufweist, die davon vorstehen und in einer lösbaren Weise mit dem Befestigungssitz (15) der Rolle (10) koppelbar sind,
wobei die Befestigungselemente (23) in einem kreisförmigen Muster angeordnet sind und eine Vielzahl von Zähnen aufweisen, die quer in Bezug auf die innere Deckfläche (21a) vorstehen.

2. Befestigungssystem nach Anspruch 1, wobei die mindestens eine Rolle (10) eine Außenseite (13) und eine Innenseite (11) aufweist, die einander gegenüberliegen, wobei die Außenseite (13) eine flache Verankerungsfläche (14) zum Verankern der Nabe (M) aufweist, auf der der Befestigungssitz (15) ausgebildet ist.

3. Befestigungssystem nach Anspruch 1 oder 2, wobei die seitliche Abdeckscheibe (20) eine im Wesentlichen linsenförmige Form hat.

4. Befestigungssystem nach Anspruch 3, wobei die seitliche Abdeckscheibe (20) eine im Wesentlichen konvex-konkave linsenförmige Form hat.

5. Befestigungssystem nach einem der Ansprüche 1 bis 4, wobei die seitliche Abdeckscheibe (20) einen Flächenabschnitt aufweist, der zumindest teilweise flach (22) und im Wesentlichen orthogonal in Bezug auf die axiale Richtung (X-X) der Ausdehnung der seitlichen Abdeckscheibe (20) ausgerichtet ist.

6. Befestigungssystem nach Anspruch 5, wobei die Befestigungselemente (23) von der flachen Oberfläche (22) vorstehen.

7. Befestigungssystem nach einem der Ansprüche 1 bis 6, wobei die seitliche Abdeckscheibe (20) einen Hohlkörper (20a) und einen Stopfen (20b) aufweist, die miteinander koppelbar sind.

8. Befestigungssystem nach Anspruch 7, wobei der Stopfen (20b) Befestigungselemente (23) aufweist, die davon vorstehen und in einer lösbaren Weise mit dem Befestigungssitz (15) der Rolle (10) koppelbar sind, so dass der Stopfen (20b) den Hohlkörper (20a) verschließt, wenn er mit dem Befestigungssitz (15) gekoppelt ist.

9. Befestigungssystem nach einem der Ansprüche 1 bis 8, wobei die Befestigungselemente (23) nicht weniger als zwölf an der Zahl und ausgebildet sind, in die kreisförmige Aussparung (15a) eingepasst zu werden, und wobei die Kopplung vom Einrasttyp durch Eingriff ist.

10. Zwillingsrad (1) umfassend:
einen zentralen Körper (2), der dazu bestimmt ist, mit einer Haltevorrichtung gekoppelt zu werden, und der zwei gegenüberliegende Seitenwände (3, 4) aufweist, die sich auf parallelen Ebenen erstrecken und zwischen denen ein Durchgangskanal (5) angeordnet ist,
ein Paar von Rollen (10), die mittels einer Nabe (M) drehbar miteinander verbunden sind, die in dem Durchgangskanal (5) eingepasst ist, wobei das Paar von Rollen (10) jeweils eine Innenseite (11) aufweist, die den Seitenwänden (3, 4) des zentralen Körpers (2) zugewandt ist,
**dadurch gekennzeichnet, dass** es ein Befestigungssystem zum Befestigen der seitlichen Abdeckscheiben (20) nach einem der Ansprüche 1 bis 9 umfasst.

11. Zwillingsrad (1) nach Anspruch 10, wobei die seitlichen Abdeckscheiben (20) austauschbar sind und unterschiedliche Farben haben können.

12. Dekorativer Montagesatz für seitliche Abdeckscheiben für ein Rad (1) umfassend eine Vielzahl austauschbarer seitlicher Abdeckscheiben (20) und eine Rolle (10) nach einem der Ansprüche 1 bis 11.

## Revendications

1. Système de fixation de disques de recouvrement latéraux pour roues auto-orientables, comprenant :
au moins un galet (10) monté tournant sur un moyeu (M) supporté par un corps central (2) qui peut être accouplé à un dispositif de support,
dans lequel ledit au moins un galet (10) a un côté extérieur (13) comprenant un siège de fixation (15), le système de fixation étant **caractérisé par le fait qu'**il comprend au moins un disque de recouvrement latéral interchangeable (20) et pouvant être relié, par emboîtement de forme, audit au moins un galet (10) au niveau dudit siège de fixation (15),
dans lequel ledit siège de fixation (15) comprend un évidement circulaire (15a) formé autour de la zone d'ancrage du moyeu (M),
dans lequel ledit disque de recouvrement latéral (20) a une surface de recouvrement intérieure (21a) opposée à ladite surface de recouvrement extérieure (21), la surface de recouvrement intérieure (21a) comprenant des éléments de fixation (23) dépassant de celle-ci et pouvant être accouplés d'une manière amovible au siège de fixation (15) du galet (10),
dans lequel lesdits éléments de fixation (23) sont agencés selon un motif circulaire et comprennent une pluralité de dents dépassant transversalement par rapport à ladite surface de recouvrement intérieure (21a).

2. Système de fixation selon la revendication 1, dans lequel ledit au moins un galet (10) a un côté extérieur (13) et un côté intérieur (11) opposés l'un à l'autre, le côté extérieur (13) comprenant une surface plate d'ancrage (14) pour ancrer ledit moyeu (M) sur lequel est formé ledit siège de fixation (15).

3. Système de fixation selon l'une quelconque des revendications 1 ou 2, dans lequel ledit disque de recouvrement latéral (20) a une forme sensiblement lenticulaire.

4. Système de fixation selon la revendication 3, dans lequel ledit disque de recouvrement latéral (20) a une forme sensiblement lenticulaire convexe-concave.

5. Système de fixation selon l'une quelconque des revendications 1 à 4, dans lequel ledit disque de recouvrement latéral (20) comprend une partie de surface au moins partiellement plate (22) et orientée de manière sensiblement orthogonale par rapport à la direction axiale (X-X) d'extension dudit disque de recouvrement latéral (20).

6. Système de fixation selon la revendication 5, dans lequel lesdits éléments de fixation (23) dépassent de ladite surface plate (22).

7. Système de fixation selon l'une quelconque des revendications 1 à 6, dans lequel le disque de recouvrement latéral (20) a un corps creux (20a) et un obturateur (20b) pouvant être accouplés l'un à l'autre.

8. Système de fixation selon la revendication 7, dans lequel ledit obturateur (20b) comprend des éléments de fixation (23) dépassant de celui-ci et pouvant être accouplés d'une manière amovible au siège de fixation (15) du galet (10), de telle sorte que ledit obturateur (20b) ferme ledit corps creux (20a) quand il est accouplé audit siège de fixation (15).

9. Système de fixation selon l'une quelconque des revendications 1 à 8, dans lequel lesdits éléments de fixation (23) ne sont pas inférieurs à douze en nombre et sont adaptés pour être installés dans ledit évidement circulaire (15a) et dans lequel l'accouplement est de type à encliquetage par interférence.

10. Roue double (1) comprenant :
un corps central (2) destiné à être accouplé à un dispositif de support et comprenant deux parois latérales opposées (3, 4) s'étendant sur des plans parallèles et entre lesquelles est positionné un canal traversant (5),
une paire de galets (10) reliés d'une manière tournante l'un à l'autre à l'aide d'un moyeu (M) claveté dans ledit canal traversant (5), la paire de galets (10) ayant chacun un côté intérieur (11) faisant face aux parois latérales (3, 4) du corps central (2), **caractérisée par le fait qu'**elle comprend un système de fixation pour fixer les disques de recouvrement latéraux (20) selon l'une quelconque des revendications 1 à 9.

11. Roue double (1) selon la revendication 10, dans laquelle lesdits disques de recouvrement latéraux (20) sont interchangeables et peuvent avoir différentes couleurs.

12. Kit d'assemblage décoratif pour disques de recouvrement latéraux pour roue (1) comprenant une pluralité de disques de recouvrement latéraux interchangeables (20) et un galet (10) selon l'une quelconque des revendications 1 à 11.
